# EUROPEAN PATENT SPECIFICATION

(11) **EP 2 136 588 B1**
(45) Date of publication and mention of the grant of the patent: **29.05.2013**
(21) Application number: 09162747.1
(22) Date of filing: 16.06.2009
(51) Int. Cl.: H04W 28/26, H04W 72/14, H04W 74/08, H04L 29/08

(54) **Control mechanism for common control channel use**
Steuermechanismus zur Verwendung eines Common Control Channels
Mécanisme de contrôle pour une utilisation commune de canal de contrôle

(30) Priority: 19.06.2008 FI 20085625
(43) Date of publication of application: 23.12.2009
(73) Proprietor: Cassidian Finland Oy, 00380 Helsinki (FI)
(72) Inventor: Annanpalo, Juhani, 02260 Espoo (FI); Tarkiainen, Janne, 02400 Kirkkonummi (FI)
(74) Representative: Honkasalo, Terhi Marjut Anneli

(56) References cited:
- WO-A1-2006/108921
- WO-A2-01/47288
- GB-A- 2 359 458
- US-B1- 6 353 617

## Description

### FIELD OF THE INVENTION

The present invention relates to communications, and more particularly to controlling transmissions in the air interface.

### BACKGROUND OF THE INVENTION

In mobile communications systems common control channels are tools that the infrastructure uses to control its radio terminal population. During operations, a radio terminal monitors a common control channel of a base station and through that exchanges information needed in essential operations of the system.

The control channel load in each base station area results from several factors, most of which are highly random. The factors include the number of the radio terminals in the base station cell, movement of the radio terminals in and out of the cell, the amount of group and individual voice call activities in the cell, and the amount of application related activities in groups and individual radio terminals residing in the cell (status messages, short data messages, acknowledgements to the received messages, etc.)

Due to the increased use of applications, and the limited resources of the air interface, there are situations where the common control channel capacity is used in full and in risk of running out. It is clearly understood that an efficient mechanism to control usage of common control channels by some non-essential services is needed in order to ensure adequate resources for critical and therefore prioritized services.

The need for such mechanism is fundamental in mobile radio systems that are used by public safety and security organizations. Users of the networks are authorities, like fire brigades, police, ambulance and rescue services. The radio communication is used by such authorities in their field operations where lives and property are often in danger. Thus, non-critical services need to be implemented in such a way that critical communication operations of these organizations are not without risked or disturbed at any circumstances.

In existing location services, transmissions of location information are performed in the radio terminals according to stored trigger values. These trigger values may be changed with a control message transmitted from the mobile radio system to the radio terminal. However, in these existing methods the control operations are based on load estimates, if any. Therefore they are not able to react to sudden signalling load changes or higher than normal signalling or data load peaks in individual base stations. For example in emergency operations that involve several users from various organizations the load rises very quickly and the common control channel gets easily jammed due to slow or no reaction by the load control system. However, lives may be in danger when critical communications do not get through.

In addition, in existing location solutions control operations are based on operations of individual radio terminals. This means that the controlling entity needs to be aware of radio terminal situation at all times, and has to react accordingly any time when a radio terminal roams to a new base station. Such continuous monitoring of radio terminals causes a lot of unnecessary and undesired load to the system. Even sending of individually addressed requests to provide the new trigger to limit location reports causes additional load to the control channel, and does typically so in situations where additional load should be strictly avoided.

Controling usages of common control channels are also described in US 6353617, WO 2006/108921 and GB 2359458.

### SUMMARY OF THE INVENTION

An object of the present invention is thus to provide a method and apparatuses implementing the method such that common control channels may be optimally used for delivery of service related information without risking the prioritized communications of the network users. The objects of the invention are achieved by a radio terminal, a network node, a communications system, a method, and a computer program product, which are characterized by what is stated in the independent claims. The preferred embodiments of the invention are disclosed in the dependent claims.

The invention is based on the idea of measuring, in the network side, load in one or more base stations, advantageously in each base station, and controlling transmissions of service related messages in radio terminals that reside in the base station cell according to the measured load.

An advantage of the invention is that the amount of load incurred by a service can be adjusted dynamically according to varying communication situations in individual base stations. The invention provides a number of further advantages that are discussed with the mode detailed description of exemplary embodiments.

### BRIEF DESCRIPTION OF THE DRAWINGS

In the following the invention will be described in greater detail by means of preferred embodiments with reference to the attached drawings, in which
Figure 1 shows a simplified illustration of the main elements of an embodied radio system;
Figure 2 shows a reference hardware configuration for the embodied elements;
Figure 3 illustrates an exemplary scenario for the location information protocol usage in the embodied communications system;
Figure 4 illustrates basic operations and exchange of information between the embodied elements;
Figure 5 illustrates implementation of the invention in a controlling network node; and
Figure 6 illustrates implementation of the invention in an embodied radio terminal.

### DETAILED DESCRIPTION OF THE INVENTION

It is appreciated that the following embodiments are exemplary. Furthermore, although the specification may in various places refer to "an", "one", or "some" embodiment(s), reference is not necessarily made to the same embodiment(s), or the feature in question does not only apply to a single embodiment. Single features of different embodiments may be combined to provide further embodiments.

The present invention relates to a mobile communication system where a defined control channel is used to transfer various types of signalling and application information. A variety of system configurations applying a variety of communication technologies may be used separately or in combinations to implement the embodiments of the invention. Communication systems and technologies evolve continuously, and embodiments of the invention may require a number of modifications that are basically obvious for a person skilled in the art. Therefore all words and expressions of this specification should be interpreted broadly, as they are intended merely to illustrate, not to restrict, the embodiments.

In the following the principles of the present invention are described by means of a communication system applying Terrestrial Trunked Radio (TETRA) technology. In the following, the invention is described using the terms and elements of the TETRA air interface as specified in the European Telecommunication Standards ETSI EN 300 392-2; European Standard (Telecommunications series); Terrestrial Trunked Radio (TETRA); Voice plus Data (V+D); Part 2: Air Interface (Al), and ETSI TR 102 580; Terrestrial Trunked Radio (TETRA); Release 2; Designer's Guide; TETRA High-Speed Data (HSD); TETRA Enhanced Data Service (TEDS), however, without limiting the invention to this one radio system technology.

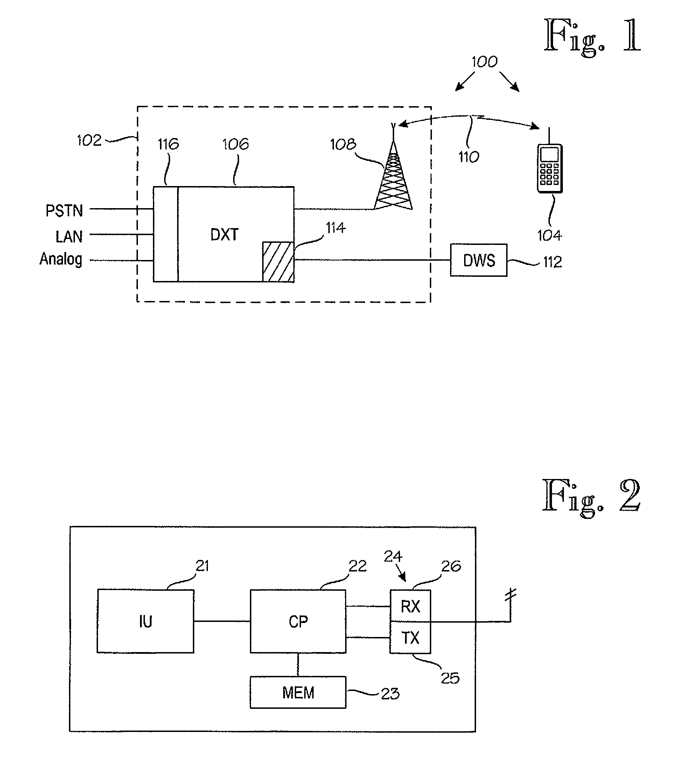

Figure 1 shows a simplified illustration of the main elements of an embodied radio system 10. The radio system 100 comprises a switching and management infrastructure (SwMI) 102 and a mobile station (MS) 104. SwMI 102 is equipment for a voice plus data (V+D) network, which enables subscriber terminals to communicate with each other. In Figure 1 SwMI is illustrated with one digital exchange (DXT) 104, and one base station (TBS) 108, but naturally the number of elements and their mutual interconnections in SwMI may vary according to the implementation.

Of the subscriber terminals, the mobile station (MS) 104 is a radio terminal arranged to access SwMI via the air interface 110. The other type of subscriber terminals, the dispatching workstation 112, communicates with SwMI 102 through a dispatching interface 114, which can provide the connection using, for example, E1, ISDN BA, or IP protocols. In practice the radio system can comprise a multiplicity of dispatching workstations 112 and corresponding interfaces 114 of different type. Additionally, SwMI 102 comprises an interface 116 for interconnection with other networks, such as PSTN, GSM, WCDMA, conventional analog networks, LAN, WAN, and similar. The protocols related to different interfaces are implementation specific arrangements familiar from the prior art.

A mobile station 104 applying TETRA standard definitions may connect with SwMI and provide users with circuit mode calls and delivery of short data and Internet Protocol (IP) packet data. Packet data may be used by applications running directly within the mobile station or it may be used by external data terminals (not shown) that may be connected with the mobile station via a Peripheral Equipment Interface (PEI) defined in TETRA standards. In the latter case PEI conveys packet data between an application and a connected mobile station.

TETRA technology, as such, is extensively documented and well known to a person skilled in the art. The European Telecommunications Standards Institute (ETSI) standard EN 300 392-2 V3.2.1 is the first version of a TETRA standard that incorporates a High-Speed Data (HSD) enhancement, generally referred to as "TEDS" or TETRA Enhanced Data Service. This incorporation has resulted in an enhanced air interface known as the TETRA Release 2 air interface. As a measure of integration, the 4-slot TDMA access structure of the air interface plus its TDMA frames, slots and subslots is preserved and access to the HSD channels is allowed via the TETRA Release 1 common control channel. The HSD channels employ additional modulations and channel codings, various coding rates and HSD channel bandwidths.

Accordingly, an integrated TETRA network may comprise a conventional infrastructure and a high-speed data enhanced infrastructure. A conventional mobile station comprising a TETRA Release 1 transceiver is able to communicate conventionally via the TETRA Release 1 air interface with the TETRA Release 1 infrastructure. Base stations of the enhanced infrastructure are, on the other hand, enhanced to have the conventional TETRA Release 1 transceivers and additionally one or more high-speed data transceivers. The conventional mobile station is able to communicate also via an enhanced base station, and the common infrastructure using all services and facilities offered by the TETRA Release 1 network whilst ignoring any high-speed data related signaling.

On the other hand, an enhanced high-speed data enabled mobile station that comprises a conventional TETRA Release 1 transceiver and a high-speed data transceiver first registers to an enhanced base station in the traditional way via the TETRA Release 1 common control channel, and informs the infrastructure of its high-speed data channel capabilities. The enhanced mobile station is then ready to receive and/or transmit data over a conventional TETRA Release 1 common control channel or a TETRA Release 2 channel.

The invention relates to a mechanism that requires adjustments to network and terminal elements of the communication system, and may thus be embodied at least in a mobile station, a base station, or a controller element of the communication system. In the present embodiment, the applied radio access network is TETRA network and a TETRA mobile station (MS) is used here to represent an entity that is formed by any type of subscriber identification element and TETRA terminal equipment, and utilizes main control channel in air interface communications. The TETRA base station (TBS) represents here a switching and management infrastructure element that is responsible for radio transmission and reception to or from the mobile station, and utilizes common control channel in air interface communications. Both conventional and enhanced base stations use common control channels in their operations, so either type of base stations are applicable in the present embodiment. The TETRA Digital Exchange (DXT) represents here a controller element that monitors the operations in the network and when necessary delivers to the base stations and mobile stations signalling messages to control their use of common control channels. In other network configurations, the control function may be implemented in some other controlling element.

The block diagram in Figure 2 shows a reference hardware configuration applicable for a mobile station (MS) 104, base station BTS and digital exchange DXT apparatus of the present embodiment.

The apparatus comprises an interface unit 21 with at least one input unit for inputting data to the internal processes of the apparatus and at least one output unit for outputting data from the internal processes of the apparatus. In a mobile station apparatus, the interface unit typically comprises a user interface with a keypad, a touch screen, a microphone, and equals for inputting data and a screen, a touch screen, a loudspeaker, and equals for outputting data. In a base station apparatus the interface unit typically comprises plug-in units acting as a gateway for information delivered to its external connection points and for information fed to the lines connected to its external connection points.

The interface unit 21 is electrically connected to a processor unit 22 for performing systematic execution of operations upon data. The processor unit 22 is a central element that essentially comprises an arithmetic logic unit, a number of special registers and control circuits. Memory unit 23, data medium where computer-readable data or programs, or user data can be stored, is connected to the processor unit 22. The memory unit 23 typically comprises volatile or non-volatile memory, for example EEPROM, ROM, PROM, RAM, DRAM, SRAM, firmware, programmable logic, etc.

A mobile station and a base station apparatus comprise a radio transceiver unit 24, which includes a transmitter 25 and a receiver 26, and is also electrically connected to the processor unit 22. The transmitter 25 receives a bitstream from the processor unit 22, and converts it to a radio signal for transmission by the antenna 27. Correspondingly, the radio signals received by the antenna 27 are led to the receiver 26, which converts the radio signal into a bitstream that is forwarded for further processor to the processor unit 22. The functions implemented by the processor unit 22 in transmission typically comprise encoding, reordering, interleaving, scrambling, channel multiplexing, and burst building.

The reference hardware configuration of a digital exchange apparatus corresponds with the configuration of the base station, but the digital exchange typically does not comprise a radio transceiver unit.

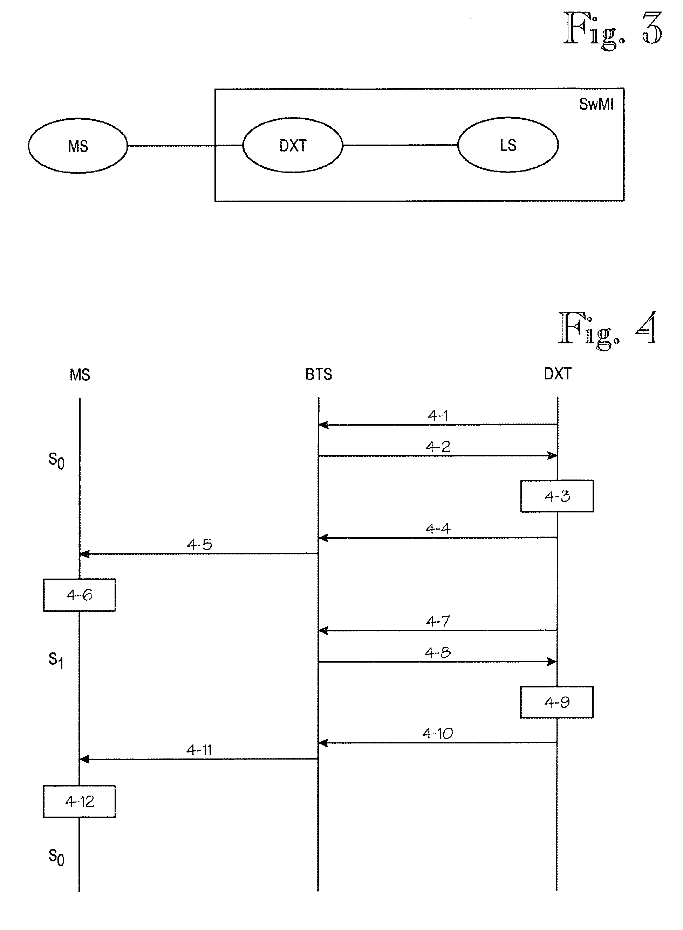

The processor unit 22, memory unit 23, interface unit 22 and radio transceiver unit 24 are electrically interconnected to provide means for performing systematic execution of operations on the received and/or stored data according to the predefined, essentially programmed processes of the mobile station. In solutions according to the invention, the operations comprise functions for controlling transmissions of location information from one or more mobile stations within a base station cell. These operations are described in more detail with Figures 4 to 6.

In mobile communications systems common control channels are tools that the infrastructure uses to control the mobile station population. During operations, a mobile station monitors a common control channel of a base station and through that exchanges messages needed for essential operations of the system, like registering to the system, initiating connections for voice calls or for packet data transfer, or paging of the mobile station for incoming voice calls or packet data traffic. In the embodied TETRA base station cells, one carrier is typically defined as a main carrier frequency. The frequency of the main carrier for the cell is broadcast by the infrastructure, and a main control channel (MCCH) is located on timeslot 1 of the main carrier of the base station. There can also be up to 3 secondary control channels on the main carrier.

The sources for common control channel load comprise, for example, call setup and late entry signalling, text message and status signalling, registration and handover signalling, login/logout signalling and base station broadcast signalling. It may be easily seen that many of these signalling operations are related to essential communication situations and their operability needs to be maintained at any situation. In situations where the common control channel signalling is in the risk to congest it is important to ensure that any restrictive measures can be directed to other, less fundamental signalling. Typically such signalling relates to services that apply short messages to deliver operational and/or additional information of the service over the air interface.

As an example, restriction of one of such services is discussed in more detail. In a location service a mobile station sends its latest location information to the system. The location service processes this with good approximation to a geographical location of the mobile station, which can then be an input for other applications. In location solutions the location update of a radio terminal may be requested by another device or the mobile station sends its location updates based on some predefined criteria automatically. In both of the modes the requesting device and the receiver of the location updates may be a mobile radio system, a map application or another radio terminal. In the first alternative the location report is requested from another device that sends a request to the mobile station, which acknowledges the request by sending back its current location information. In the latter alternative a mobile station sends frequent location reports to the system based on predefined or configurable reporting settings based on time, distance, combined time and distance intervals, status, priority or velocity.

A basic way to control the amount of load incurred by the location service is to adjust the sending of messages in the application. However, typically the applications are in control of the end-user organizations, but the responsibility to ensure common control channel capacity is with the operator. There typically is not enough information or motivation in the side of the end-user organizations to control the communications of the location service in such a manner that common control channel capacity of the air interface would be used optimally. Another conventional method focuses on the latter mode and applies in the automatic transmissions of individual mobile stations trigger values that may be changed over the air by the operator of the mobile communications system. The change operations are based on estimated load values and trigger values are changed by short messages that may be addressed to an individual mobile station or to a group of mobile stations. There are, however, several drawbacks with both of these conventional methods.

First of all, the conventional solutions are based on an estimate of the load, which means that it is not possible to react quickly to unexpected signalling load changes (increases or decreases) in one or more base stations. A control logic based on estimates or forecasts always has to use safety margins, so sometimes the location capacity becomes restricted too strongly although there would be capacity to provide better service level.

On the other hand, the safety margin may turn out to be too small in case of extensive signalling or data activity in the base station and thus, the load control based on estimates will not guarantee satisfactory capacity for the critical signalling. The random nature of common control channel use makes it impossible to estimate or forecast the control channel load accurately and fast enough for efficient load control and capacity optimization. For example, when numerous radio terminals using location services roam to a certain base station, the uplink signalling channels might get jammed due sum of location and other signalling. On the other hand, the jamming situation might also be caused by a small number of radio terminals with extensive data traffic. Such situations are not acceptable, the capacity for other critical services in the system need to be ensured. Accordingly, the radio system needs to provide a fast mechanism to dynamically limit the load generated by the location services, not only in case of extensive volume of location updates but also when the volume of the other traffic in the common control channel increases.

In addition, solutions based on operations of individual mobile station require that a controlling entity is aware of radio terminal situation all the time, and reacts when a mobile station roams to new base station. Follow-up of the mobile station causes unnecessary load to the system and sending individually addressed requests to limit location reports to the mobile station causes additional load to the control channel when it is already loaded.

A further disadvantage of the conventional solutions is that they typically apply only to the mode where the mobile station sends its location information automatically. It is noted that there are some use cases where the requesting device is another mobile station. Basically radio-to-radio applications would be advantageous in some situations, because only location information on mobile stations of interest needs to be transmitted. However, in these implementations, uplink request messages as well as downlink response messages cause additional load that varies from mobile station to mobile station and is therefore very difficult to control. In order to protect common control channel capacity, many such applications are abandoned, even if they might be more applicable to a particular use case, as such.

In the present invention, the common control channel load is managed by a control entity in the network side in such a manner that one or more of the above disadvantages are overcome or alleviated. In the following, a solution for controlling the common control channel load is illustrated by means of a TETRA system that supports Location Information Protocol (LIP). The Location Information Protocol (LIP) is a TETRA air interface optimized application layer protocol that can utilize various transport mechanisms. LIP is location determination technology independent, supports a wide variety of location applications and at the same time optimizes usage of air interface resources. LIP defines functional entities and basic location reports and control messages to set and modify mobile station behaviour and to initiate sending of location reports. It should be noted, however, the LIP is applied mainly because it provides practical and generic means for information exchange between a controlling network entity and a mobile station (MS) that provides or uses location information. For a person skilled in the art it is clear that any standard or proprietary protocol providing the similar functionality is applicable within the scope of protection.

Figure 3 illustrates an exemplary scenario for the location information protocol usage in the embodied TETRA system of Figure 1. The mobile station MS acts as a LIP location information source and the location server LS as a LIP location requester as well as a location information destination. For a person skilled in the art it is clear that the configuration is only a simple example, and a variety of entities inside and outside the TETRA domain may be applied without deviating from the scope of protection. In figure 3 the location requester LS controls location information source MS in the normal situation. In case of extensive common control channel load, DXT may get involved in controlling location information source MS. Location information reports are sent to the location information destination LS. LIP supports triggered reporting, where location information requester sends trigger definitions to the information source MS, and the source sends location information reports as invoked by the defined triggers. The role of LIP is to optimize the use of location reports sent by the information source over the air interfaces. As a result these location information reports are location service independent, and all services may use the same location reports.

In the present invention actual load on control channels in the base station cells are measured separately. The measurement takes account not only the location reports but all other signalling and messages transmitted on the control channel. The measurement is based on an algorithm that may take into account the number of the location information messages on a control channel per a time unit ,or actual control channel load, which indicates the portion of the allocated and free time slots per a time unit, or both of them. Based on the real time measurements of the control channel load the mobile radio system may automatically send group addressed load control messages to be delivered to the radio terminals within the cell to command them to reduce the sending of the location reports. The load control at each base station may be managed separately, but the used parameters may be defined on the network level, i.e. they may be common to all exchanges and base stations in the network.

The signaling chart of Figure 4 illustrates basic operations and exchange of information between the embodied elements MS, BTS, DXT described above. BTS represents a base station operating in the TETRA domain of DXT and MS a mobile station operating within the cell of BTS.

In the beginning, DXT requests (step 4-1) uplink load related information of a defined common control channel MCCH from BTS. Advantageously DXT does this periodically, and queries the information from each base station of the network. BTS sends (step 4-2) the answer, and DXT determines the load and compares (step 4-3) it to a predefined threshold value TH1. If the threshold is exceeded, DXT activates a common control channel uplink load control mode, hereinafter called as temporary reporting. Advantageously DXT uses an existing interface for asking the main common control channel (MCCH) load information from TBS. For example, an interface conventionally used for reading TBS counters to be included in the statistics reports may be applied for this purpose.

In this embodiment, the common control channel uplink load rate in percent may be derived from: *100* * *(Reserved uplink half slots* + *Used random access half slots)* / *(All uplink half slots).*

It should be noted that half slot represents in this embodiment a single capacity unit of a total common control channel resource. Depending on the implementation, any unit (bits, bytes, PDUs, slots, ...) indicating the amount of the resource used for free for signalling may be applied without deviating from the scope of protection. In addition to the measured MCCH load, also the number of actual uplink LIP messages can be taken into account. DXT advantageously calculates this value as half slots. Accordingly, the LIP share i.e. load caused by LIP messages in percentage in the MCCH uplink is:

### 100 * (Number of uplink half slots used for LIP messages / A// uplink half slots).

The actual algorithm can be based on common control channel load only or take both load rates into account. In the present embodiment, the latter option is used. Accordingly,
*If (Uplink load > MCCH load threshold) AND (LIP share > LIP load threshold) then (Start temporary reporting).*

Used in this way, the LIP reporting rate may be changed only if LIP messages have considerable impact on the MCCH load, i.e. there are a lot of LIP messages sent. If the operator wants to reduce LIP traffic always when the common control channel load exceeds the given threshold, LIP threshold can be set to zero. In a similar way, the position reporting interval is returned to normal, when the load has decreased to under defined return value (parameter) for either of the thresholds:
*If (Uplink load < MCCH return load) OR (LIP load < LIP return load) then stop temporary reporting.*

The transitions between temporary and normal reporting states are controlled by the controlling entity, but the implementations may vary within the scope of protection. For example, all transitions may be requested transitions, or part of the transitions may be timer-assisted. Different variations are clear to a person skilled in the art and will not be explicitly described herein.

In order to enter the common control channel uplink load control mode in the mobile station, DXT sends to the mobile station a message that comprises a request to implement new reporting parameters. In the present embodiment, the parameters are transmitted in group addressed short messages delivered to mobile stations under the overloaded base station. The mobile station is attached to the group used for the delivery of the DXT message. In Figure 4 this shows as the delivery of message from DXT (step 4-4) via TBS to MS (step 4-5).

Group addressing of the message ensures that the message may be delivered to a number of mobile stations in the base station cell with reduced amount of signalling. Distribution of the message is enabled only to the base station in question, for example by delivering the message only to the specific base station, or by including to the message some control data on the basis of which the other base stations may determine that they are not supposed to deliver the message.

Group addressing may used in various ways to control the extent of the group of mobile stations the restriction applies to. If reporting of all mobile stations are restricted, DXT may address the message to a system broadcast address that, according to the standard specifications, all mobile stations scan for transmissions. It may be defined that any mobile station receiving the information via that system broadcast address implements the restriction. Alternatively, it is possible to define one or more subscriber classes and associate mobile stations with them. The load restriction messages may then be sent with subscriber class code to address restriction to certain mobile stations only. The mobile stations with the specific subscriber class will obey the load restriction.

Alternatively, is also possible to configure all mobile stations of the communications system to listen to a dedicated group short subscriber identity (GSSI). When the base station delivers the message within its cell, all mobile stations in the cell may receive the control information in the cell and operate according to the control information in it.

Alternatively, it is also possible to direct restrictions to only some mobile stations. One may configure separate groups of one or more mobile stations to listen to messages addressed to respective dedicated group short subscriber identities (GSSI). When the base station delivers the message to a defined GSSI within its cell, only the mobile stations listening to that GSSI in the cell may receive the control information in the cell and restrict their transmissions according to the control information in it. Other mobile stations may continue their normal operation.

During normal operation, a mobile station operates according to its normal location report trigger sent by the location server. This is denoted in Figure 4 as mode S₀ of the mobile station. When the mobile station receives the message from DXT, is reads the information on the message and adjusts its reporting parameters accordingly. In Figure 4 this is shown as the mobile station transitioning (step 4-6) into mode S₁.

Advantageously, the operator may define the system level intervals to be used in load control situations as absolute time interval value or as relative change to normal. The trigger refers here to an impulse the conditions of which have to be fulfilled in order to send the next location update. In this embodiment the trigger may relate to a time interval or to a geographical distance to the previous point of reporting. The relative change to normal may indicate, for example, two times slower location updates. This multiplies the time interval or distance trigger value by two, depending on which one is currently used for the individual radio terminal.

Advantageously, the message from DXT also comprises a validity indicator that indicates a time period during which the included trigger values are valid. Unless a request to return to normal or a refresh of the temporary parameters is received from DXT, the mobile station will after the termination of the validity period return to mode S₀.

Since the load control messages are sent only in the control channel of the base station that reported the excessive load, terminals not listening to the common control channel at the time of delivery do not receive information. In order to reach also those terminals that access the common control channel only after the temporary reporting request, DXT advantageously repeats the sending of group addressed load control short messages periodically, preferably as long as the temporary reporting is on. This helps to ensure that eventually all mobile stations using the common control channel should receive temporary reporting instructions. The repetition messages may also be used to refresh the validity indicators in the mobile stations.

The DXT also continues requesting (steps 4-7 and 4-8) uplink load related information from BTS. If DXT at comparing the load to a predefined return-to-normal threshold value detects that the threshold is no longer exceeded, it initiates (step 4-9) return to the normal reporting mode. The return may be implemented explicitly by sending (steps 4-10 and 4-11) to the mobile station a request to return to normal. In order to increase the probability to reach all potential recipients, also this request may be transmitted two or more times, preferably periodically. When the mobile station receives the message, it returns (step 4-12) to normal reporting mode S0. The request may also be implemented with less messaging implicitly such that DXT stops sending refresh messages. After the earlier indicated validity period the mobile stations will return back to normal reporting automatically.

The real time measurement of the control channel load enables the radio system to react fast to the changing load conditions and load control takes place in advance before the control channel will get jammed. The invention also optimises the use of the control channel due to its fast reaction to the varying loading conditions, both in higher and in lower load situations.

Furthermore, the temporary location report trigger values in individual base stations may be altered by the mobile radio system according to the measured control channel load of the respective base stations. New trigger values may be made valid only within the base station where those new trigger values are transmitted. When mobile station roams to another base station it may start to use its normal trigger values.

In case a new subscriber roams into the site, in which the control channel load is temporarily restricted, the radio terminal receives the repatedly transmitted temporary load reporting trigger value and thus it is commanded to reduce it location reports accordingly. The procedure helps to ensure that all radio terminals, also the new ones that entered the site after the load control started, will likely reduce the number of the location reports. No individually addressed messages are needed for the new subscribers in the site area.

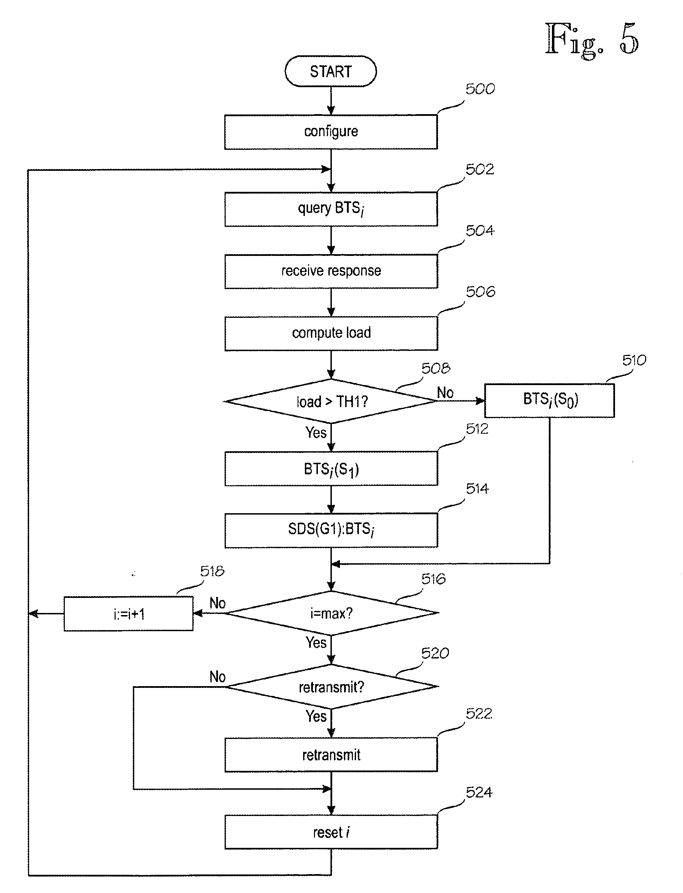

Figure 5 illustrates implementation of the invention in a controlling network node. The network node is embodied in the DXT of the embodiment of Figure 1 to 4, so descriptions in these figures may be referred to for more information. The procedure begins in a stage where the controlling network node is switched on and operatively connected to the base station and therefore capable of exchanging messages with the base station and mobile stations in the base station cell. In the beginning the network node is configured (step 500) with means for implementing the procedure. The step comprises storing to the network node functions, parameters, timers, triggers and algorithms necessary for performing operations in the following steps and enabling commands to apply them during operation of the network node. The illustrated operations of the network node comprise two main operations, a monitoring operation where the network node acquires measurement information from one or more base stations on their respective common control channel loads, and a control operation that comprises operative interaction between the network node and a base station of the load status of a common control channel of which is deemed too high in the network node.

In the monitoring operations, the network node sends to one or more base stations under its control a request for measurement information indicating at least the individual load status of the base station. Advantageously the network node sends the request according to a defined schedule to all base stations in its own network domain. In step 502, the network node sends the request to the first base station in the schedule. The request comprises a command to provide information on load values measured in one or more common control channels of the base station. For more detailed description on the request procedure and contents on the measurement information, reference is made to Figure 4. When the network node receives (step 504) a response by the base station, it computes (step 506) a value for the load in the one or more common control channels. The network node compares this value to a threshold TH1 configured to the network node in step 500. If (step 508) the load exceeds the threshold TH1, the network node initiates a control operation for reducing the load in the common control channel by changing the transmission rate of location information in the mobile stations in the cell of that base station. If (step 508) the load does not exceed the threshold TH1, the transmission rate of location information in the mobile station does not need to change.

A used transmission rate of location information in the mobile station is illustrated by means of mobile station reporting modes S₀ or S₁, where S₀ relates to a normal transmission mode and S1 relates to a restricted transmission mode. Accordingly, if the load does not exceed the threshold TH1, the network node allows (step 510) the mobile stations in the base station cell to continue operating in the normal S₀ mode and does not need to control their transmissions to the location server. If the load exceeds the threshold TH1, the network node needs to command (step 512) the mobile stations in the base station cell to transition to mode S1. This is implemented by generating a group addressed message that comprises control information requesting entry to mode S1. For more information on the addressing and control parameters applicable in this embodiment, reference is made to description of Figure 4.

The group G1 addressed message SDS is delivered (step 514) to the base station that reported the exceeding load value. As discussed above, the network node ensures that the group addressed message is delivered only within the base station cell. This may be implemented by, for example, by delivering the group addressed message only to the specific base station. Alternatively, it is possible to include in the message an indication, on the basis of which any other base station is able to determine that it is not supposed to transmit the message, even if some members of the group would actually reside in its cell.

The network node checks (step 516) whether there are more base stations to be queried for measurement information. If there are, the network node moves (step 518) to the next base station and returns to step 502 to perform the request procedure. If there are not, the network node advantageously checks (step 520) whether it is necessary to retransmit the control message. The need for retransmissions may be configured according to the implementation. For example, the network node may be configured to retransmit the message periodically throughout the time the mobile stations are expected to operate in mode S1. Other variations may be easily generated by a person skilled in the art. If the need exists, the network node retransmits (step 522) the message. Otherwise the procedure progresses directly to step 524 where the base station schedule is reset and the network node again begins to query measurement information from the base stations.

When a radio terminal receives a temporary reporting request that transits it to S₁, the radio terminal typically stores this value in a specific memory slot but does not delete the normal reporting interval values. The radio terminal and starts sending location information applying the restricted parameter, for example time or distance interval. During restricted location reporting, the radio terminal transmits the location information more seldom than normal. The load on the common control channel in the base station site is reduced but also the service level of the location is reduced, which means a temporary reduction in accuracy of the location information. After the temporary load restriction the radio terminal returns back to the normal reporting interval, and starts to send the next location updates again with the normal intervals.

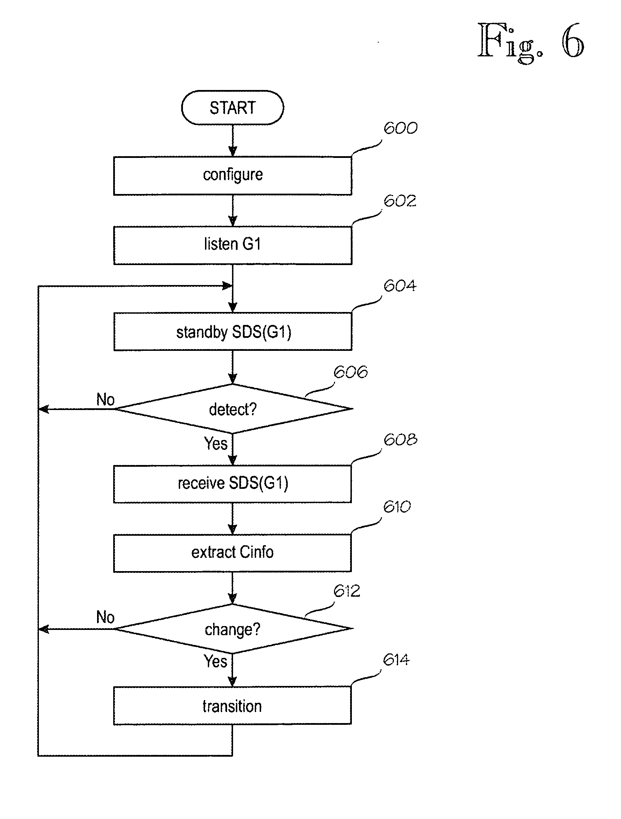

Figure 6 illustrates implementation of the invention in an embodied radio terminal. The radio terminal is embodied in the mobile station of the embodiment of Figure 1 to 4, so descriptions in these figures may be referred to for more information. The procedure begins in a stage where the mobile station is switched on and operatively connected to the base station and therefore capable of exchanging messages with the base station and a controlling network node connected to the base station. In the beginning the mobile station is configured (step 600) with means for implementing the procedure. The step comprises storing to the mobile station functions, parameters, timers, triggers and algorithms necessary for performing operations in the following steps and enabling commands to apply them during operation of the mobile station. The step also means initiating operations in mode S₀, i.e. in the normal reporting mode.

In step 602 the mobile station begins to listen to a group G1 that is configured to the mobile station in step 600. G1 is the group that the network node uses to address messages that comprise control information for controlling transmissions of location information from the mobile station. Listening to the group in this context means that the mobile station is informed on communication activities in the group, and may receive messages and/or participate in voice communications of that group. Accordingly, the mobile station becomes standby (step 604) for messages addressed to group G1. If (step 606) the mobile station detects a message SDS(G1) addressed to group G1, it receives (step 608) the message conventionally and extracts (step 610) from the message the control information Cinfo generated by the network node. For more information on the modes and respective control information types, reference is made to description of Figure 4.

In step 612 the mobile station checks, on the basis of the control information, whether a change to the transmission rate of the location information is necessary. If the mobile station is in the normal reporting mode S₀ and the control information does not comprise a request to change the rate of transmissions of the location information, the mobile station continues operation in the S₀ mode, and the procedure returns to step 604 of waiting for new control information from the network node. If the control information indicates a request to restrict the rate transmissions of the location information, the mobile station will transition (step 614) to another mode S₁, and starts transmitting its location information according to the new control information included in the message, or predefined for mode S₁.

If the mobile station is in the restricted reporting mode S₁, the change occurs when the mobile station detects the end of the temporary reporting period. The mobile station may detect the end on the basis of explicit control information received from the network node. Alternatively, the mobile the control information may comprise an indication on a validity period, and the mobile station detects the end of the temporary reporting period when the validity period terminates. The steps/points, signaling messages and related functions described above in Figures 4 to 6 are in no absolute chronological order, and some of the steps/points may be performed simultaneously or in an order differing from the given one. Other functions can also be executed between the steps/points or within the steps/points and other signaling messages sent between the illustrated messages. Some of the steps/points or part of the steps/points can also be left out or replaced by a corresponding step/point or part of the step/point. The network node operations illustrate a procedure that may be implemented in one or more physical or logical entities. The signaling messages are only exemplary and may even comprise several separate messages for transmitting the same information. In addition, the messages may also contain other information.

In an aspect, the invention enables prioritization of location services between different groups of users. For some groups location service is an essential operational element but for other groups it may only be a convenient supplement. Ability to focus the restrictive operations to the latter group is important when very different groups share a same network infrastructure. As discussed above, through selection between broadcast groups or dedicated GSSI groups that all members are forced to listen to at all times, it is possible to implement the restrictions to all users within the base station or to members of one or more selected groups operating in the base station cell. Furthermore, using relative change of the reporting interval retains any earlier organization-specific service priorities by weakening the service level equally for everybody. The users with best location service level before restrictions will have the best, although weakened service level also during the load control period. It is also possible to define specific changes and/or control parameters for different user groups. As an example, in the case of uplink common control channel congestions, a first organization may apply relative change of 1,4 times their normal reporting interval or distance, a second organization may apply three times their normal reporting interval or distance, and a third organization may use an absolute time interval of 120 seconds.

In an aspect, the invention also enables further management of traffic between neighbouring base stations. The network node may be configured to transmit the control message for transmission in the base station with the excessive common control channel load, and in its neighbouring base stations. The mobile station may use this information on the neighbouring base station load restriction in deciding whether to roam or not, and/or to restrict its transmissions already at or before roaming to the base station with high common control channel load.

In an aspect, the invention also enables improved control of downlink transmissions in cases where the location requester is another radio terminal. In such case, the uplink load may be controlled as described above, but it is noted that also the downlink load in the cell of the requesting radio terminal may get congested from the mass of responses from the other terminals. The rights of the requesting radio terminal to receive location information are typically defined by the location service. The rights define at least whether the requesting device is allowed to receive location data over control channels of the system, whose location information can be provided to the requesting radio terminal and how often the location updates can be delivered for it (part of load control mechanism). In the proposed solution, radio terminals are configured to send their responses to a defined mediator, for example a network element of the communications system or an external location server, notwithstanding the fact whether the request comes from the network element or a requesting radio terminal. The mediator is operatively connected to the controlling network element such that the transmissions from the mediator to the requesting radio terminal may be controlled.

For example, the rights of the requesting radio terminal to receive location information are defined in the location service data. The rights indicate i) if the requesting device is allowed to receive location data, ii) whose location information can be provided to the requesting device and iii) how often the location updates can be delivered for it. The mediator may create a compressed data package of the location data comprising location data of one or more requested radio terminals, time stamps, tracking data and other possible information on them, and send the data package over the air interface to the requesting radio terminal. Due to the operative connection between the mediator and the controlling network, the transmission may be controlled according to the actual load status in the common control channel of the requesting radio terminal. In addition to restricting the transmissions in the common control channel, the data carrier may be changed to either IP Packet Data channel or a group call traffic channel dedicated for data transmissions of specific users.

The embodied solution enables digital radio system to optimize the usage of scarce air interface signalling resources for location reports without substantially causing additional load to the system. The solution does not require laborious and vulnerable operations to follow movements of individual mobile stations in the system nor creating estimations for base stations with different load. The solution is based on real time measurements of the actual load of the individual control channels so it allows fast reaction to sudden load variations in individual base stations without need to widen effects to other base stations.

It is noted that location service and LIP protocol are used in the described embodiments as an example of a service the uplink transmissions of which may be controlled in order to secure capacity of the common control channels for mission critical operations of a network. The invention is applicable to any service that involves uplink transmissions and supports a communication protocol for exchange of information between a controlling node of the network delivering the transmissions and source of the uplink transmissions.

It will be obvious to a person skilled in the art that, as the technology advances, the inventive concept can be implemented in various ways. The invention and its embodiments are not limited to the examples described above but may vary within the scope of the claims.

## Claims

1. A network node (106), comprising:
means for communicating with one or more mobile stations (104) at least part of which comprise a service application transmitting information over a common control channel of their present base station (108);
means for determining a measured load in a common control channel of a base station (108); **characterized by**
means for determining a share of the measured load in the common control channel of the base station (108) by the load from messages of the service application;
means for comparing the measured load to a defined load threshold of the base station (108), the defined load threshold comprising a threshold for the share of the measured load in the common control channel of the base station (108) by the load from messages of the service application;
means for controlling the rate of transmissions of the service application from the mobile stations (104) served by the base station (108) according to the result of the comparison.

2. A network node (106) according to claim 1, **characterized by**
means for querying measured load-related information from one or more base stations (108) of the network; and
means for computing the measured loads of the base stations (108) on the basis of the measured load-related information received from the base stations (108).

3. A network node (106) according to claim 2, **characterized in that** the measured load-related information indicates the amount of reserved uplink resources.

4. A network node (106) according to claim 2 or 3, **characterized in that** the measured load-related information comprises one or more of the following: number of reserved uplink half slots, number of used random access half slots, number of all uplink half slots, number of uplink half slots used for service application messages.

5. A network node (106) according to any of claims 1 to 4, **characterized by**
means for generating, in response to the measured load of a common control channel of a base station (108), a group addressed control message carrying the control information; and
means for enabling delivery of the control message to the mobile stations (104) served by the base station (108).

6. A network node (108) according to any of claims 1 to 5, **characterized by** the control information comprising validity information that defines a period during which the control information is valid for the mobile stations (104).

7. A network node (106) according to any of claims 1 to 6, **characterized in that** the control information comprises a new value for time interval or location distance to be applied in the mobile station (104).

8. A network node (106) according to any of claims 1 to 6, **characterized in that** the control information comprises a relative change for time interval or location distance to be applied in the mobile station (104).

9. A network node (104) according to claim 4, **characterized by** means for sending the message only to one base station (108) the load of which is in question.

10. A network node (106) according to any of claims 1 to 9, **characterized by**
means for connecting to a mediator to which location information from mobile stations is stored;
means for detecting a mobile station requesting location information from the mediator;
means for determining the common control channel of the requesting mobile station;
controlling transmissions from the mediator to the requesting mobile station according to the measured load in the common control channel.

11. A mobile station (104), comprising:
a service application transmitting information to an information destination over a common control channel of base station (108) in a radio network (100), **characterized by**
means for receiving from the base station (108) a group addressed message comprising control information that includes an indication on a subscriber class;
means for extracting from the group addressed message the control information;
means for determining whether the subscriber class in the control information matches with its own subscriber class;
means for adjusting the rate of transmitting the service application information according to the received control information in response to the control information matching with its own subscriber class.

12. A mobile station (104) according to claim 11, **characterized in that** the control information comprises a new value for time or location distance to be applied in the mobile station (104).

13. A mobile station (104) according to claim 11, **characterized in that** the control information comprises a relative change for time or location distance to be applied in the mobile station (104).

14. A radio system (100) comprising a network node (106) according to any of claims 1 to 10 and a mobile station (104) according to any of claims 11 to 13.

15. A method comprising:
implementing operations of a network node;
communicating with one or more mobile stations at least part of which comprise a service application transmitting information over a common control channel of their present base station; **characterized by**
determining (4-3) measured loads in common control channels of at least the present base stations of the one or more mobile stations;
determining (4-3) share of the measured load in the common control channel of the base station by the load from messages of the service application;
comparing (4-3) the measured loads to defined load thresholds of the base stations, the defined load threshold comprising a threshold for the share of the measured load in the common control channel of the base station by the load from the messages of the service application;
controlling (4-4, 4-5) the rate of transmissions from the mobile stations according to the result of the comparison

16. A method comprising:
implementing operations of a mobile station that comprises a service application transmitting information to an information destination over a common control channel of base station in a radio network, **characterized by**
receiving (608) from the radio network a group addressed message comprising control information;
extracting (610) from the group addressed message the control information;
determining (612) whether the subscriber class in the control information matches with its own subscriber class; and
adjusting (614) the rate of transmitting the information according to the received control information in response to the control information matching with its own subscriber class.

17. A computer program product readable by a computer and encoding a computer program of instructions for executing a computer process for communication, the process including steps of claim 15 or claim 16.

## Patentansprüche

1. Netzknoten (106), der umfasst:
Einrichtungen zum Kommunizieren mit einer oder mehreren Mobilstationen (104), wobei wenigstens ein Teil derselben eine Dienstanwendung zum Senden von Informationen über einen Common-Control-Channel ihrer vorhandenen Basisstation (108) umfasst,
Einrichtungen zum Bestimmen einer gemessenen Last in einem Common-Control-Channel einer Basisstation (108), **gekennzeichnet durch:**
Einrichtungen zum Bestimmen eines Anteils der gemessenen Last in dem Common-Control-Channel der Basisstation (108) aufgrund der Last von Nachrichten der Dienstanwendung,
Einrichtungen zum Vergleichen der gemessenen Last mit einem definierten Lastschwellwert der Basisstation (108), wobei der definierte Lastschwellwert ein Schwellwert für den Anteil der gemessenen Last in dem Common-Control-Channel der Basisstation (108) aufgrund der Last von Nachrichten der Dienstanwendung ist,
Einrichtungen zum Steuern der Senderate der Dienstanwendung von den **durch** die Basisstation (108) bedienten Mobilstationen (104) in Übereinstimmung mit dem Vergleichsergebnis.

2. Netzknoten (106) nach Anspruch 1, **gekennzeichnet durch:**
Einrichtungen zum Abfragen von Informationen mit Bezug auf die gemessene Last von einer oder mehreren Basisstationen (108) des Netzwerks, und
Einrichtungen zum Berechnen der gemessenen Lasten der Basisstationen (108) auf der Basis der von den Basisstationen (108) empfangenen Informationen mit Bezug auf die gemessene Last.

3. Netzknoten (106) nach Anspruch 2, **dadurch gekennzeichnet, dass** die Informationen mit Bezug auf die gemessene Last die Größe von reservierten Uplink-Ressourcen angeben.

4. Netzknoten (106) nach Anspruch 2 oder 3, **dadurch gekennzeichnet, dass** die Informationen mit Bezug auf die gemessene Last eine oder mehrere der folgenden umfassen: die Anzahl von reservierten Uplink-Halbschlitzen, die Anzahl von verwendeten Zufallszugriff-Halbschlitzen, die Anzahl aller Uplink-Halbschlitze, die Anzahl von für Dienstanwendungsnachrichten verwendeten Uplink-Halbschlitzen.

5. Netzknoten (106) nach einem der Ansprüche 1 bis 4, **gekennzeichnet durch:**
Einrichtungen zum Erzeugen, in Antwort auf die gemessene Last eines Common-Control-Channel einer Basisstation (108) einer gruppenadressierten Steuernachricht, die die Steuerinformationen trägt, und
Einrichtungen zum Aktivieren der Übermittlung der Steuernachricht zu den **durch** die Basisstation (108) bedienten Mobilstationen.

6. Netzknoten (106) nach einem der Ansprüche 1 bis 5, **dadurch gekennzeichnet, dass** die Steuerinformationen Gültigkeitsinformationen umfassen, die eine Periode definieren, während welcher die Steuerinformationen für die Mobilstationen (104) gültig sind.

7. Netzknoten (106) nach einem der Ansprüche 1 bis 6, **dadurch gekennzeichnet, dass** die Steuerinformationen einen neuen Wert für ein Zeitintervall oder eine Entfernung umfassen, der in der Mobilstation (104) anzuwenden ist.

8. Netzknoten (106) nach einem der Ansprüche 1 bis 6, **dadurch gekennzeichnet, dass** die Steuerinformationen eine relative Änderung für das Zeitintervall oder die Entfernung umfassen, die in der Mobilstation (104) anzuwenden ist.

9. Netzknoten (106) nach Anspruch 4, **gekennzeichnet durch** eine Einrichtung zum Senden der Nachricht nur zu einer Basisstation (108), deren Last unbekannt ist.

10. Netzknoten (106) nach einem der Ansprüche 1 bis 9, **gekennzeichnet durch:**
Einrichtungen für eine Verbindung mit einem Mediator, in dem Positionsinformationen von Mobilstationen gespeichert sind,
Einrichtungen zum Erfassen einer Mobilstation, die Positionsinformationen von dem Mediator anfragt,
Einrichtungen zum Bestimmen des Common-Control-Channel der anfragenden Mobilstation,
Einrichtungen zum Steuern des Sendens von dem Mediator zu der anfragenden Mobilstation in Übereinstimmung mit der gemessenen Last in dem Common-Control-Channel.

11. Mobilstation (104), die umfasst:
eine Dienstanwendung zum Senden von Informationen zu einem Informationsziel über einen Common-Control-Channel einer Basisstation (108) in einem Funknetz (100), **gekennzeichnet durch:**
Einrichtungen zum Empfangen von der Basisstation (108) einer gruppenadressierten Nachricht, die Steuerinformationen einschließlich einer Angabe zu einer Teilnehmerklasse enthält,
Einrichtungen zum Extrahieren der Steuerinformationen aus der gruppenadressierten Nachricht,
Einrichtungen zum Bestimmen, ob die Teilnehmerklasse in den Steuerinformationen der eigenen Teilnehmerklasse entspricht,
Einrichtungen zum Einstellen der Rate für das Senden der Dienstanwendungsinformationen in Übereinstimmung mit den empfangenen Steuerinformationen in Antwort darauf, dass die Steuerinformationen der eigenen Teilnehmerklasse entsprechen.

12. Mobilstation (104) nach Anspruch 11, **dadurch gekennzeichnet, dass** die Steuerinformationen einen neuen Wert für eine Zeit oder eine Entfernung umfassen, der in der Mobilstation (104) anzuwenden ist.

13. Mobilstation (104) nach Anspruch 11, **dadurch gekennzeichnet, dass** die Steuerinformationen eine relative Änderung für eine Zeit oder eine Entfernung umfassen, die in der Mobilstation (104) anzuwenden ist.

14. Funksystem (100), das einen Netzknoten (106) nach einem der Ansprüche 1 bis 10 und eine Mobilstation (104) nach einem der Ansprüche 11 bis 13 umfasst.

15. Verfahren, das umfasst:
Implementieren von Operationen eines Netzknotens,
Kommunizieren mit einer oder mehreren Mobilstationen, von denen wenigstens ein Teil eine Dienstanwendung zum Senden von Informationen über einen Common-Control-Channel ihrer vorhandenen Basisstation umfasst, **gekennzeichnet durch:**
Bestimmen (4-3) von gemessenen Lasten in Common-Control-Channels wenigstens der vorhandenen Basisstationen der einen oder mehreren Mobilstationen,
Bestimmen (4-3) des Anteils der gemessenen Last in dem Common-Control-Channel der Basisstation aufgrund der Last von Nachrichten der Dienstanwendung,
Vergleichen (4-3) der gemessenen Lasten mit definierten Lastschwellwerten der Basisstationen, wobei der definierte Lastschwellwert ein Schwellwert für den Anteil der gemessenen Last in dem Common-Control-Channel der Basisstation aufgrund der Last von den Nachrichten der Dienstanwendung ist,
Steuern (4-4, 4-5) der Senderate von den Mobilstationen in Übereinstimmung mit dem Vergleichsergebnis.

16. Verfahren, das umfasst:
Implementieren von Operationen einer Mobilstation, die eine Dienstanwendung zum Senden von Informationen zu einem Informationsziel über einen Common-Control-Channel einer Basisstation in einem Funknetz umfasst, **gekennzeichnet durch:**
Empfangen (608) von dem Funknetz einer gruppenadressierten Nachricht, die Steuerinformationen enthält,
Extrahieren (610) der Steuerinformationen aus der gruppenadressierten Nachricht,
Bestimmen (612), ob die Teilnehmerklasse in den Steuerinformationen der eigenen Teilnehmerklasse entspricht, und
Einstellen (614) der Rate zum Senden der Informationen in Übereinstimmung mit den empfangenen Steuerinformationen in Antwort darauf, dass die Steuerinformationen der eigenen Teilnehmerklasse entsprechen.

17. Computerprogrammprodukt, das durch einen Computer gelesen werden kann und ein Computerprogramm mit Befehlen für die Ausführung durch einen Computerprozess für eine Kommunikation codiert, wobei der Prozess die Schritte von Anspruch 15 oder 16 enthält.

## Revendications

1. Noeud de réseau (106) comprenant :
des moyens pour communiquer avec une ou plusieurs stations mobiles (104) dont une partie au moins comprend une application de service transmettant des informations sur un canal de contrôle commun de leur station de base actuelle (108) ;
des moyens pour déterminer une charge mesurée dans un canal de contrôle commun d'une station de base (108) ; **caractérisé par** :
des moyens pour déterminer un partage de la charge mesurée dans le canal de contrôle commun de la station de base (108) par la charge à partir des messages de l'application de service ;
des moyens pour comparer la charge mesurée à un seuil de charge défini de la station de base (108), le seuil de charge défini comprenant un seuil pour le partage de la charge mesurée dans le canal de contrôle commun de la station de base (108) par la charge à partir des messages de l'application de service ;
des moyens pour commander la vitesse des transmissions de l'application de service à partir des stations mobiles (104) prises en charge par la station de base (108) selon le résultat de la comparaison.

2. Noeud de réseau (106) selon la revendication 1, **caractérisé par** :
des moyens pour demander des informations se rapportant à la charge mesurée à une ou à plusieurs stations de base (108) du réseau ; et
des moyens pour calculer les charges mesurées des stations de base (108) sur la base des informations se rapportant à la charge mesurée reçues en provenance des stations de base (108).

3. Noeud de réseau (106) selon la revendication 2, **caractérisé en ce que** les informations se rapportant à la charge mesurée indiquent la quantité de ressources de liaison montante réservées.

4. Noeud de réseau (106) selon la revendication 2 ou 3, **caractérisé en ce que** les informations se rapportant à la charge mesurée comprennent un ou plusieurs des éléments suivants : le nombre de demi-tranches de liaison montante réservées, le nombre de demi-tranches à accès aléatoire utilisées, le nombre total de demi-tranches de liaison montante, le nombre de demi-tranches de liaison montante utilisées pour les messages d'application de service.

5. Noeud de réseau (106) selon l'une quelconque des revendications 1 à 4, **caractérisé par** :
des moyens pour générer, en réponse à la charge mesurée d'un canal de contrôle commun d'une station de base (108), un message de contrôle adressé par groupe portant les informations de contrôle ; et
des moyens pour permettre la remise du message de contrôle aux stations mobiles (104) prises en charge par la station de base (108).

6. Noeud de réseau (106) selon l'une quelconque des revendications 1 à 5, **caractérisé par le fait que** les informations de contrôle comprennent des informations de validité qui définissent une période au cours de laquelle les informations de contrôle sont valides pour les stations mobiles (104).

7. Noeud de réseau (106) selon l'une quelconque des revendications 1 à 6, **caractérisé en ce que** les informations de contrôle comprennent une nouvelle valeur d'intervalle de temps ou de distance d'emplacement à appliquer dans la station mobile (104).

8. Noeud de réseau (106) selon l'une quelconque des revendications 1 à 6, **caractérisé en ce que** les informations de contrôle comprennent une modification relative d'intervalle de temps ou de distance d'emplacement à appliquer dans la station mobile (104).

9. Noeud de réseau (104) selon la revendication 4, **caractérisé par** des moyens destinés à envoyer le message seulement à une station de base (108) dont la charge est concernée.

10. Noeud de réseau (106) selon l'une quelconque des revendications 1 à 9, **caractérisé par** :
des moyens pour se connecter à un médiateur dans lequel sont stockées les informations d'emplacement des stations mobiles ;
des moyens pour détecter une station mobile demandant des informations d'emplacement auprès du médiateur ;
des moyens pour déterminer le canal de contrôle commun de la station mobile effectuant la demande ;
la commande des transmissions en provenance du médiateur vers la station mobile effectuant la demande selon la charge mesurée dans le canal de contrôle commun.

11. Station mobile (104) comprenant :
une application de service transmettant des informations à une destination d'informations sur un canal de contrôle commun de la station de base (108) dans un réseau radio (100), **caractérisée par** :
des moyens pour recevoir en provenance de la station de base (108) un message adressé par groupe comprenant des informations de contrôle qui comprennent une indication concernant une classe d'abonné ;
des moyens pour extraire à partir du message adressé par groupe les informations de contrôle ;
des moyens pour déterminer si la classe d'abonné dans les informations de contrôle correspond à sa propre classe d'abonné ;
des moyens pour régler la vitesse de transmission des informations d'application de service selon les informations de contrôle reçues en réponse aux informations de contrôle correspondant à sa propre classe d'abonné.

12. Station mobile (104) selon la revendication 11, **caractérisée en ce que** les informations de contrôle comprennent une nouvelle valeur de temps ou de distance d'emplacement à appliquer dans la station mobile (104).

13. Station mobile (104) selon la revendication 11, **caractérisée en ce que** les informations de contrôle comprennent une modification relative de temps ou de distance d'emplacement à appliquer dans la station mobile (104).

14. Système radio (100) comprenant un noeud de réseau (106) selon l'une quelconque des revendications 1 à 10, et une station mobile (104) selon l'une quelconque des revendications 11 à 13.

15. Procédé comprenant :
la mise en oeuvre des opérations d'un noeud de réseau ;
la communication avec une ou plusieurs stations mobiles dont une partie au moins comprend une application de service transmettant des informations sur un canal de contrôle commun de leur station de base actuelle ; **caractérisé par** :
la détermination (4-3) des charges mesurées dans des canaux de contrôle communs des stations de base actuelles au moins des une ou plusieurs stations mobiles ;
la détermination (4-3) d'un partage de la charge mesurée dans le canal de contrôle commun de la station de base par la charge à partir des messages de l'application de service ;
la comparaison (4-3) des charges mesurées à des seuils de charge définis des stations de base, le seuil de charge défini comprenant un seuil pour le partage de la charge mesurée dans le canal de contrôle commun de la station de base par la charge à partir des messages de l'application de service ;
la commande (4-4, 4-5) de la vitesse des transmissions en provenance des stations mobiles selon le résultat de la comparaison.

16. Procédé comprenant :
la mise en oeuvre des opérations d'une station mobile qui comprend une application de service transmettant des informations à une destination d'informations sur un canal de contrôle commun de la station de base dans un réseau radio, **caractérisé par** :
la réception (608) en provenance du réseau radio d'un message adressé par groupe comprenant des informations de contrôle ;
l'extraction (610) à partir du message adressé par groupe des informations de contrôle ;
le fait de déterminer (612) si la classe d'abonné dans les informations de contrôle correspond à sa propre classe d'abonné ; et
le réglage (614) de la vitesse de transmission des informations selon les informations de contrôle reçues en réponse aux informations de contrôle correspondant à sa propre classe d'abonné.

17. Produit programme informatique lisible par un ordinateur et codant un programme informatique d'instructions destiné à exécuter un processus informatique de communication, le processus comprenant les étapes de la revendication 15 ou 16.
